# FASCICULE DE BREVET EUROPEEN

(11) **EP 2 909 021 B1**
(45) Date de publication et mention de la délivrance du brevet: **15.08.2018**
(21) Numéro de dépôt: 13773217.8
(22) Date de dépôt: 01.10.2013
(51) Int. Cl.: B29D 30/06, B29C 33/10

(54) **PIECE POUR UN MOULE POUR PNEUMATIQUE COMPORTANT UN INSERT**
TEIL FÜR EINE GUSSFORM FÜR EINEN REIFEN MIT EINEM EINSATZ
PART FOR A MOULD FOR A TYRE, COMPRISING AN INSERT

(30) Priorité: 17.10.2012 FR 1259901
(43) Date de publication de la demande: 26.08.2015
(73) Titulaire: Compagnie Générale des Etablissements Michelin, 63000 Clermont-Ferrand (FR)
(72) Inventeur: GUEUGNEAU, Anthony, F-63040 Clermont-Ferrand Cedex 9 (FR)
(74) Mandataire: Demaure, Pierre-Yves
(86) Numéro de dépôt international: PCT/EP2013/070393
(87) Numéro de publication internationale: WO 2014/060208

(56) Documents cités:
- WO-A1-2010/076502
- AT-B- 387 539
- DE-A1- 19 628 166
- DE-A1-102004 028 462
- DE-A1-102004 052 766
- JP-A- 2009 184 194
- KR-B1- 100 857 970
- US-A- 5 431 873
- US-A1- 2006 188 593

## Description

### DOMAINE DE L'INVENTION

La présente invention concerne une pièce destinée à être agencée dans un moule pour pneumatique, notamment un moule de type à secteurs, cette pièce comportant des moyens d'éventation. Plus particulièrement, la pièce comporte un insert rapporté dans une cavité de cette pièce, cet insert permettant une évacuation de l'air hors du moule lorsque celui-ci est fermé.

### ETAT DE LA TECHNIQUE

Un moule à secteurs comprend plusieurs parties séparées qui, par rapprochement relatif, délimitent un espace de moulage globalement toroïdal. En particulier, un moule à secteurs comporte deux coquilles latérales pour le moulage des flancs du pneumatique et plusieurs secteurs périphériques situés entre les coquilles pour le moulage de la bande de roulement du pneumatique. Le rapprochement de toutes ces parties est assuré par une cinématique adaptée grâce à un mécanisme déterminé.

Pour mouler la bande de roulement, les secteurs de moule comprennent des éléments moulants. Par élément moulant, on entend un élément du moule qui comporte une surface de moulage permettant de mouler une partie de la bande de roulement d'un pneumatique.

Il est possible de réaliser un élément moulant par un procédé de fusion sélective plus communément nommé frittage. Ce procédé utilise un faisceau énergétique pour fusionner une poudre métallique. Par « faisceau énergétique », on entend un rayonnement électromagnétique (par exemple un faisceau laser) ou un faisceau de particules (par exemple un faisceau d'électrons).

Un procédé de frittage utilisant un laser, ci-après dénommé procédé de frittage laser, est connu du document EP1641580. Dans ce document, une première couche de poudre métallique est étalée sur un plateau. Tout ou partie des grains de cette première couche de poudre est ensuite agglomérée par le faisceau d'un laser en fonction de la forme de l'objet que l'on souhaite obtenir. Une fois cette étape effectuée une deuxième couche de poudre est étalée sur la première couche de poudre pour être à son tour fusionnée sélectivement par laser. En répétant ces opérations d'étalement de couche et de fusion par laser, on construit couche par couche un objet fritté.

Le document WO2010/076502 divulgue un élément moulant particulier obtenu par cette technique de frittage laser. Cet élément moulant, appelé peau, présente une faible épaisseur et est destiné à être placé dans un moule. Afin d'éviter d'emprisonner de l'air entre le moule et une ébauche crue d'un pneumatique lors d'une opération de vulcanisation de ce pneumatique, il est nécessaire de prévoir des moyens d'éventation dans l'élément moulant.

Les documents DE102004028462 et DE102004052766 divulguent des exemples de moyens d'éventation. Plus particulièrement, ces documents divulguent une pièce de moule comportant un élément moulant obtenu par frittage laser et un élément d'interface avec le reste du moule. Cet élément d'interface est non fritté et est solidarisé avec l'élément moulant. L'élément moulant comprend dans tout son volume une pluralité de pores formant des cavités de faibles dimensions. Ces cavités sont aptes à diriger l'air vers des perçages formés dans l'élément d'interface et débouchant à l'arrière de cet élément d'interface. Or, la présence d'un grand nombre de pores dans l'élément moulant diminue la densité de matière dans cet élément et le rend plus fragile aux sollicitations mécaniques. Ainsi, les solutions d'éventation, divulguées dans les documents DE102004028462 et DE102004052766, appliquées à l'élément moulant du document WO2010/076502 rendraient cet élément trop fragile du fait de sa faible épaisseur. En outre, dans les documents DE102004028462 et DE102004052766, il est nécessaire de venir percer l'élément d'interface sur toute son épaisseur pour permettre l'évacuation de l'air hors du moule. Ceci peut fragiliser l'élément d'interface et donc à terme fragiliser la pièce de moule dans son ensemble.

Le document DE19628166 divulgue une autre solution d'éventation dans laquelle on prévoit de rapporter un insert dans une cavité préalablement réalisée dans la profondeur de l'élément moulant. L'insert comprend un corps cylindrique creux et une tête en forme de plaque venue de matière avec ce corps. La tête comprend une pluralité de trous débouchant dans la partie creuse du corps cylindrique. Le corps de l'insert a une longueur d'au moins 10 mm, de sorte qu'il est assez facile de le manipuler pour le placer dans le moule. Avec un élément moulant présentant une faible épaisseur tel que décrit dans le document WO2010/076502, il peut être nécessaire de prévoir des inserts plus petits dans la pièce de moule. Ceci rend alors leur manipulation plus difficile lors de leur mise en place dans le moule.

L'invention a donc pour objectif de proposer une solution d'éventation par un insert dans un moule qui permette de résoudre tout ou partie des inconvénients décrits ci-dessus et qui soit simple et économique à mettre en oeuvre.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « découpure » dans une bande de roulement, on entend l'espace délimité par des parois de matière se faisant face et distantes l'une de l'autre d'une distance non nulle.

Par « moule », on entend un ensemble de pièces séparées qui, par rapprochement relatif, permettent de délimiter un espace de moulage toroïdal.

Par « diamètre équivalent » d'un trou, on entend le diamètre du cercle inscrit dans la section de ce trou.

Par « motif » sur le pneumatique, on entend un ornement sur ce pneumatique pouvant améliorer son esthétique globale et/ou donnant des informations techniques ou légales sur ce pneumatique.

### RESUME DE L'INVENTION

L'invention concerne une pièce pour un moule pour pneumatique comportant un corps, ce corps comprenant une première surface destinée à mouler tout ou partie d'une surface de roulement du pneumatique, une seconde surface opposée à la première surface et destinée à être en contact avec une autre partie du moule et une face latérale reliant la première surface et la seconde surface. Le corps comprend une partie frittée, fabriquée à partir d'une poudre métallique fusionnée couche par couche, et une partie non frittée rapportée sur la partie frittée et en contact avec cette partie frittée au niveau d'une zone de contact. La partie frittée forme la première surface du corps et possède une épaisseur comprise entre 1 et 6 millimètres. La partie non frittée forme la seconde surface du corps. La pièce pour le moule comprend une cavité s'étendant à partir de la première surface dans la profondeur de la pièce au-delà de la zone de contact, cette cavité ne débouchant pas sur la seconde surface du corps. La pièce comprend un insert disposé dans la cavité, cet insert étant au même niveau que la première surface du corps et cet insert comprend un canal s'étendant à partir de la première surface du corps et débouchant au niveau de la zone de contact entre la partie frittée et la partie non frittée du corps. La zone de contact débouche sur la face latérale du corps.

L'invention propose de prévoir dans la pièce de moule une cavité suffisamment profonde pour pouvoir utiliser des inserts de longueur au moins égale à 10 mm tout en évitant que cette cavité ne débouche sur la seconde surface du corps. L'évacuation de l'air hors du moule est alors assurée par l'intermédiaire d'un canal qui s'étend à partir de la première surface du corps et qui débouche au niveau d'une zone de contact entre les deux parties constituant ce corps. On utilise ainsi l'espace naturel existant entre ces deux parties pour évacuer l'air hors du moule et ceci d'une manière simple et pratique.

Dans une variante de réalisation, le canal est formé par une pluralité de trous débouchant au niveau de la première surface du corps. Ces trous forment un maillage sur l'insert. Ces trous ont un diamètre équivalent compris entre 0,05 et 1 mm.

Les dimensions des trous dans l'insert ainsi que leur agencement permettent de limiter la pénétration de la gomme dans l'insert lorsque le moule est fermé. On évite ainsi l'apparition de protubérances de gomme vulcanisée sur la surface de roulement du pneumatique et on améliore en conséquence l'esthétique globale de ce pneumatique.

Dans un mode de réalisation préférentiel, le maillage de trous forme un marquage sur l'insert, ce marquage étant destiné à mouler un motif sur le pneumatique.

En organisant le maillage de trous de sorte à ce qu'il soit apte à créer un motif prédéfini sur le pneumatique, on améliore globalement l'esthétique du pneumatique.

Dans une variante de réalisation, la pièce de moule comporte une pluralité de protubérances faisant saillie à partir de la première surface et destinées à mouler des découpures dans la bande de roulement du pneumatique. Au moins deux protubérances de la pluralité de protubérances se croisent sur cette première surface et le canal débouche sur la première surface au croisement des deux protubérances.

L'endroit où se croisent les protubérances sur la première surface du corps est particulièrement critique puisqu'une grande quantité d'air peut s'accumuler dans cet endroit lors de la fermeture du moule sur l'ébauche crue. En faisant déboucher le canal au croisement de deux protubérances, on facilite l'évacuation de l'air hors du moule et on limite l'apparition de défauts de surface sur la bande de roulement une fois celle-ci vulcanisée.

Un autre objet de l'invention concerne un insert pour un moule pour pneumatique, cet insert étant destiné à être rapporté dans une cavité formée dans le moule, cet insert ayant une forme globalement cylindrique comportant une première face et une seconde face opposée à la première face et une enveloppe reliant la première face à la seconde face. L'insert comporte également un canal débouchant sur la première face et ce canal débouche sur l'enveloppe de l'insert à une distance comprise entre 1 et 6 mm par rapport à la première face. Ce canal ne débouche pas sur la seconde face.

Dans une variante de réalisation, le canal est formé par une pluralité de trous débouchant au niveau de la première face. Ces trous forment un maillage sur l'insert et ces trous ont un diamètre équivalent compris entre 0,05 et 1 mm.

Dans un mode de réalisation préférentiel, l'insert est obtenu par frittage laser.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** est une vue en perspective d'un élément moulant selon l'invention ;
- la **figure 2** est un agrandissement d'une vue en coupe de l'élément moulant de la **figure 1** au niveau de moyens d'éventation selon un premier mode de réalisation ;
- la **figure 3** est un agrandissement d'une vue en coupe de l'élément moulant de la **figure 1** au niveau de moyens d'éventation selon un second mode de réalisation ;
- la **figure 4** représente schématiquement une vue en coupe du motif de la **figure 1** selon un troisième mode de réalisation;
- la **figure 5** représente schématiquement une vue en coupe d'un insert conforme au mode de réalisation de la **figure 2** ;
- la **figure 6** représente schématiquement une vue en coupe d'un insert conforme au mode de réalisation de la **figure 3****.**

Dans la description qui va suivre, des éléments sensiblement identiques ou similaires seront désignés par des références identiques.

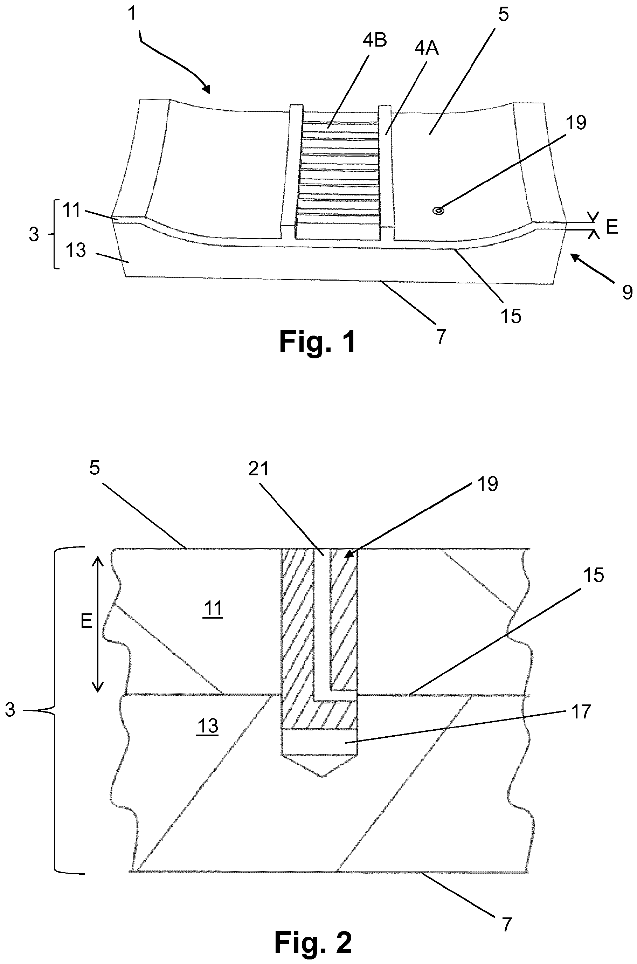

La **figure 1** présente une vue en perspective d'une pièce 1 pour un moule conforme à l'invention. Plus particulièrement, cette pièce 1 comprend un corps 3 comprenant une partie frittée 11, fabriquée à partir d'une poudre métallique fusionnée couche par couche, et une partie non frittée 13 qui est, par exemple, en acier. La partie frittée 11 forme une première surface 5 destinée à mouler une partie d'une surface de roulement d'un pneumatique et la partie non frittée forme une seconde surface 7, opposée à la première surface 5, destinée à être en contact avec une autre partie du moule (non représentée sur la **figure 1**). La partie frittée 11 est rapportée sur la partie non frittée 13 et elles forment entre elles une zone de contact 15. Cette zone de contact 15 définit avec la première surface 5 une épaisseur E de la partie frittée 11. Cette épaisseur est comprise entre 1 et 6 millimètres. Préférentiellement, cette épaisseur est comprise entre 2 et 2,5 millimètres. Ainsi, la faible épaisseur de la partie frittée confère à cette partie une légèreté et une souplesse facilitant son positionnement et son maintien lorsque celle-ci est rapportée sur la partie non frittée. On notera que cette partie frittée 11 est maintenue sur la partie non frittée 13 par des moyens de fixation (non représentés sur la **figure 1****)** tels que des vis ou de la colle.

La pièce 1 comprend également un insert 19 disposé dans une cavité de cette pièce. La **figure 2** présente de manière plus détaillée cette cavité 17 et cet insert 19. Ainsi, la cavité 17 de la pièce 1 s'étend à partir de la première surface 5 dans la profondeur de la pièce 1 au-delà de la zone de contact 15. Cette cavité 17 ne débouche pas sur la seconde surface 7 du corps 3. L'insert 19 est ici disposé dans la cavité 17 de sorte à ce qu'il soit au même niveau que la première surface 5 du corps. Plus particulièrement, l'insert comprend un canal 21 d'évacuation d'air. Ce canal 21 s'étend à partir de la première surface 5 du corps et débouche au niveau de la zone de contact 15 entre la partie frittée 11 et la partie non frittée 13. On notera que cette zone de contact débouche sur une face latérale 9 du corps (visible à la **figure 1**), cette face latérale reliant la première surface 5 à la seconde surface 7. On notera également que le canal forme ici un conduit dont le diamètre est par exemple de l'ordre de 0,8 mm.

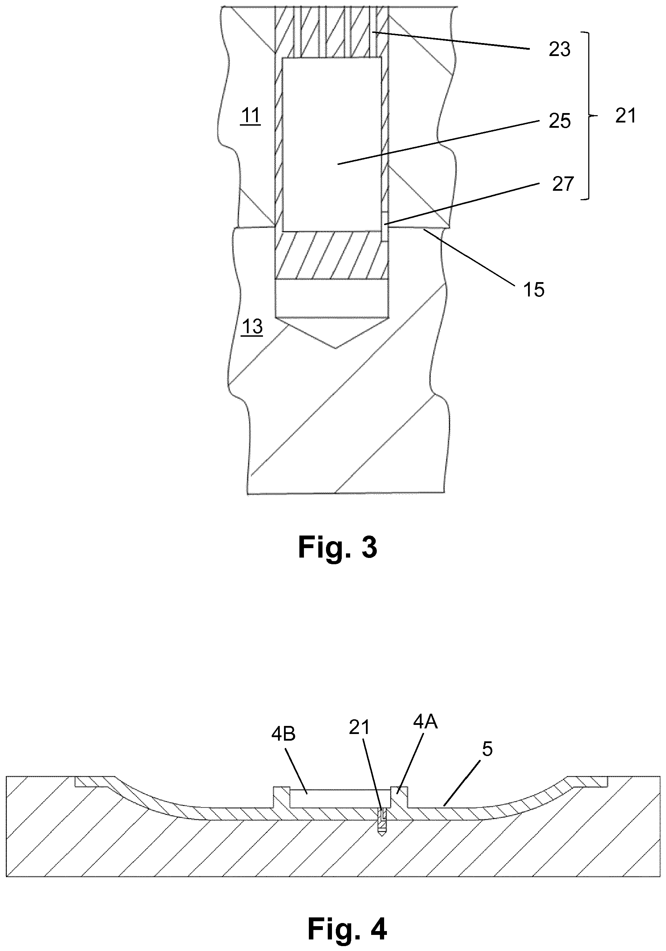

Dans un second mode de réalisation visible à la **figure 3****,** le canal 21 de l'insert 19 comprend une pluralité de trous 23, une chambre 25 dans laquelle débouchent les trous et un orifice d'évacuation 27 ouvert sur la zone de contact 15 entre la partie frittée 11 et la partie non frittée 13. Les trous 23 de l'insert 19 ont ici une section circulaire dont le diamètre est compris entre 0,05 et 1 mm. En variante, la section des trous peut être carré, triangulaire ou autres.

On notera que les trous 23 de l'insert 19 forment un maillage sur cet insert. Ce maillage peut former un marquage déterminé apte à mouler un motif particulier sur le pneumatique. Ce motif peut être, par exemple, un mot, un logo ou autres.

La **figure 4** présente un troisième mode de réalisation dans lequel le canal 21 débouche sur la première surface 5 de la pièce 1 au croisement de deux protubérances 4A, 4B faisant saillie à partir de cette première surface.

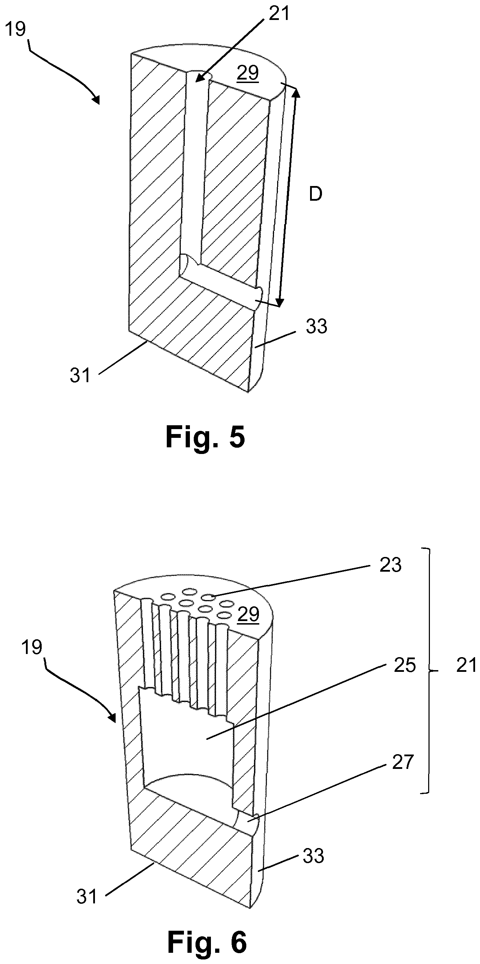

La **figure 5** représente schématiquement une vue en coupe d'un insert 19 conforme au mode de réalisation de la **figure 2****.** Cet insert 19 a ainsi une forme globalement cylindrique comportant une première face 29, une seconde face 31 opposée à la première face 29 et une enveloppe 33 reliant la première face 29 à la seconde face 31. L'insert comprend également un canal 21 débouchant sur la première face 29. Ce canal 21 débouche également sur l'enveloppe 33 à une distance D comprise entre 1 et 6 mm par rapport à la première face 29. On notera ici que le canal 21 ne débouche pas sur la seconde face 31.

La **figure 6** représente schématiquement une vue en coupe d'un insert 19 conforme au mode de réalisation de la **figure 3****.** Dans cette variante, le canal 21 comprend une pluralité de trous 23, une chambre 25 dans laquelle débouchent les trous et un orifice d'évacuation 27. Les trous 23 de l'insert 19 ont ici une section circulaire dont le diamètre est compris entre 0,05 et 1 mm. En variante, la section des trous peut être carrée, triangulaire ou autres.

On notera que les inserts des **figures 5** et **6** peuvent être fabriqués par frittage laser. En variante, ces inserts peuvent être fabriqués par tout autre procédé, tel que par un procédé de moulage.

L'invention n'est pas limitée aux exemples décrits et représentés et diverses modifications peuvent y être apportées sans sortir de son cadre.

## Revendications

1. Pièce pour un moule pour pneumatique comportant un corps (3), ce corps comprenant une première surface (5) destinée à mouler tout ou partie d'une surface de roulement du pneumatique, une seconde surface (7) opposée à la première surface et destinée à être en contact avec une autre partie du moule, et une face latérale (9) reliant la première surface et la seconde surface, le corps comprenant une partie frittée (11), fabriquée à partir d'une poudre métallique fusionnée couche par couche, et une partie non frittée (13) rapportée sur la partie frittée et en contact avec cette partie frittée au niveau d'une zone de contact (15), la partie frittée formant la première surface du corps et la partie non frittée formant la seconde surface du corps, la partie frittée ayant une épaisseur (E) comprise entre 1 et 6 millimètres, la pièce (1) pour le moule comprenant une cavité (17) s'étendant à partir de la première surface dans la profondeur de la pièce (1) au-delà de la zone de contact (15), cette cavité ne débouchant pas sur la seconde surface du corps, **caractérisée en ce que** la pièce comprend un insert (19) disposé dans la cavité, cet insert étant au même niveau que la première surface du corps et **en ce que** l'insert comprend un canal (21) s'étendant à partir de la première surface du corps et débouchant au niveau de la zone de contact (15) entre la partie frittée et la partie non frittée du corps, ladite zone de contact débouchant sur la face latérale (4) du corps.

2. Pièce pour un moule selon la revendication 1, dans laquelle le canal (21) est formé par une pluralité de trous (23) débouchant au niveau de la première surface du corps, ces trous formant un maillage sur l'insert (19), ces trous ayant un diamètre équivalent compris entre 0,05 et 1 mm.

3. Pièce pour un moule selon la revendication 2, dans laquelle le maillage de trous (23) forme un marquage sur l'insert, ce marquage étant destiné à mouler un motif sur le pneumatique.

4. Pièce pour un moule selon l'une quelconque des revendications 1 à 3, dans laquelle cette pièce comporte une pluralité de protubérances (4A, 4B) faisant saillie à partir de la première surface et destinées à mouler des découpures dans la bande de roulement du pneumatique, au moins deux protubérances de la pluralité de protubérances se croisant sur cette première surface, et dans laquelle le canal (21) débouche sur la première surface (5) au croisement des deux protubérances.

## Patentansprüche

1. Komponente für eine Gießform für Luftreifen, die einen Körper (3) enthält, wobei dieser Körper eine erste Oberfläche (5), die dazu bestimmt ist, eine gesamte Laufoberfläche des Luftreifens oder einen Teil hiervon zu gießen, eine zweite Oberfläche (7) gegenüber der ersten Oberfläche, die dazu bestimmt ist, mit einem anderen Teil der Gießform in Kontakt zu sein, und eine Seitenfläche (9), die die erste Oberfläche und die zweite Oberfläche verbindet, umfasst, wobei der Körper einen gesinterten Teil (11) enthält, der ausgehend von einem schichtweise geschmolzenen Metallpulver hergestellt ist, und einen nicht gesinterten Teil (13) enthält, der mit dem gesinterten Teil zusammengefügt ist und mit diesem gesinterten Teil auf Höhe einer Kontaktzone (15) in Kontakt ist, wobei der gesinterte Teil die erste Oberfläche des Körpers bildet und der nicht gesinterte Teil die zweite Oberfläche des Körpers bildet, wobei der gesinterte Teil eine Dicke (E) im Bereich von 1 bis 6 Millimetern besitzt, wobei die Komponente (1) für die Gießform einen Hohlraum (17) aufweist, der sich von der ersten Oberfläche in Tiefenrichtung des Teils (1) über die Kontaktzone (15) hinaus erstreckt, wobei dieser Hohlraum nicht in die zweite Oberfläche des Körpers mündet, **dadurch gekennzeichnet, dass** die Komponente einen Einsatz (19) aufweist, der in dem Hohlraum angeordnet ist, wobei sich dieser Einsatz auf der gleichen Ebene wie die erste Oberfläche des Körpers befindet, und dass der Einsatz einen Kanal (21) aufweist, der sich von der ersten Oberfläche des Körpers erstreckt und auf Höhe der Kontaktzone (15) zwischen dem gesinterten Teil und dem nicht gesinterten Teil des Körpers mündet, wobei die Kontaktzone (15) zur Seitenfläche (4) des Körpers führt.

2. Komponente für eine Gießform nach Anspruch 1, wobei der Kanal (21) durch mehrere Löcher (23) gebildet ist, die auf Höhe der ersten Oberfläche des Körpers münden, wobei diese Löcher in dem Einsatz (19) ein Netz bilden, wobei diese Löcher einen äquivalenten Durchmesser im Bereich von 0,05 bis 1 mm besitzen.

3. Komponente für eine Gießform nach Anspruch 2, wobei das Lochnetz (23) eine Kennzeichnung in dem Einsatz bildet, wobei diese Kennzeichnung dazu bestimmt ist, auf den Luftreifen ein Muster zu gießen.

4. Komponente für eine Gießform nach einem der Ansprüche 1 bis 3, wobei diese Komponente mehrere Erhebungen (4A, 4B) aufweist, die von der ersten Oberfläche vorstehen und dazu bestimmt sind, in dem Laufband des Luftreifens Ausschnitte zu gießen, wobei sich wenigstens zwei der mehreren Erhebungen auf dieser ersten Oberfläche kreuzen und wobei der Kanal (21) an der Kreuzung der beiden Erhebungen in die erste Oberfläche (5) mündet.

## Claims

1. Tyre mould part comprising a body (3), this body comprising a first surface (5) intended to mould all or part of a tread surface of the tyre, a second surface (7) opposite the first surface and intended to be in contact with another part of the mould, and a lateral face (9) connecting the first surface and the second surface, the body comprising a sintered part (11) made of a metallic powder fused together layer by layer, and a non-sintered part (13) attached to the sintered part and in contact with this sintered part at a contact zone (15), the sintered part forming the first surface of the body and the non-sintered part forming the second surface of the body, the sintered part having a thickness (E) of between 1 and 6 millimetres, the mould part (1) comprising a cavity (17) extending from the first surface into the depth of the part (1) beyond the contact zone (15), this cavity not opening onto the second surface of the body, **characterized in that** the part comprises an insert (19) placed in the cavity, this insert being at the same level as the first surface of the body, and **in that** the insert comprises a canal (21) extending from the first surface of the body and opening onto the contact zone (15) between the sintered part and the non-sintered part of the body, the said contact zone opening onto the lateral face (4) of the body.

2. Mould part according to Claim 1, in which the canal (21) is formed by a plurality of holes (23) opening onto the first surface of the body, these holes forming a grid structure on the insert (19), these holes having an equivalent diameter of between 0.05 and 1 mm.

3. Mould part according to Claim 2, in which the grid structure of holes (23) forms a marking on the insert, this marking being intended to mould a pattern on the tyre.

4. Mould part according to any one of Claims 1 to 3, in which this part comprises a plurality of protrusions (4A, 4B) projecting from the first surface and intended to mould cuts in the tread of the tyre, at least two protrusions of the plurality of protrusions intersecting on this first surface, and in which mould part the canal (21) opens onto the first surface (5) at the intersection of the two protrusions.
